# EUROPÄISCHE PATENTSCHRIFT

(11) **EP 3 126 170 B1**
(45) Veröffentlichungstag und Bekanntmachung des Hinweises auf die Patenterteilung: **06.02.2019**
(21) Anmeldenummer: 15713180.6
(22) Anmeldetag: 26.03.2015
(51) Int. Cl.: B60J 7/02, B60J 7/043

(54) **SYSTEM FÜR EIN FAHRZEUGDACH**
SYSTEM FOR A VEHICLE ROOF
SYSTÈME POUR TOIT DE VÉHICULE

(30) Priorität: 04.04.2014 DE 102014104834
(43) Veröffentlichungstag der Anmeldung: 08.02.2017
(73) Patentinhaber: Webasto SE, 82131 Stockdorf (DE)
(72) Erfinder: FÄRBER, Manfred, 82131 Stockdorf (DE)
(74) Vertreter: Epping - Hermann - Fischer
(86) Internationale Anmeldenummer: PCT/EP2015/056629
(87) Internationale Veröffentlichungsnummer: WO 2015/150239

(56) Entgegenhaltungen:
- EP-A1- 2 368 735
- DE-A1- 3 822 258
- GB-A- 2 180 295
- JP-A- 2010 285 124

## Beschreibung

Die Erfindung betrifft ein System für ein Fahrzeugdach, insbesondere für ein Schiebedach eines Kraftfahrzeugs.

Ein Dach für ein Fahrzeug kann einen Deckel aufweisen, an dem ein Deckelträger befestigt ist. Der Deckelträger dient zur mechanischen Unterstützung des Deckels sowie als Montageschnittstelle für den Deckel. An dem Deckelträger ist beispielsweise eine Mechanik zum Verschieben des Deckels relativ zu dem Dach koppelbar.

Die EP 2 368 735 A1 beschreibt eine Führungsschiene mit einer Ausnehmung, durch die eine Schraube zugänglich ist.

Es ist wünschenswert, ein System für ein Fahrzeugdach anzugeben, das einfach montierbar ist und wenig Bauraum benötigt.

Gemäß zumindest einer Ausführungsform der Erfindung weist ein System für ein Fahrzeugdach einen Deckelträger, eine Führungsschiene, einen Deckel und eine Schraube auf. Die Führungsschiene weist einen Führungskanal, ein Loch und eine Ausnehmung auf. Die Führungsschiene umgibt das Loch in einer Ebene vollständig. Der Deckel ist zwischen einer ersten und einer zweiten Position entlang der Führungsschiene in eine erste Richtung verschiebbar. Der Deckelträger ist mittels der Schraube am Deckel befestigbar. In der ersten Position ist die Schraube in dem Führungskanal angeordnet. Insbesondere ist die Schraube zumindest teilweise in dem Führungskanal angeordnet. Das Loch ist so an der Führungsschiene positioniert, dass in der ersten Position die Schraube durch das Loch von einer dem Führungskanal gegenüberliegenden Seite der Führungsschiene aus entlang einer zweiten Richtung zugänglich ist. Die Ausnehmung ist so an der Führungsschiene positioniert, dass die Schraube durch die Ausnehmung aus dem Führungskanal in eine dritte Richtung auskoppelbar ist. Die erste, die zweite und die dritte Richtung sind jeweils quer zueinander ausgerichtet.

Die erste Position ist beispielsweise im Betrieb eine geschlossene Position des Deckels. Durch das Loch ist die Schraube auch in der geschlossenen Position des Deckels zugänglich. Somit ist es möglich, mittels eines Werkzeugs die Schraube zu drehen, wenn der Deckel in der ersten, geschlossenen Position angeordnet ist. Dadurch ist es beispielsweise möglich, den Deckel im geschlossenen Zustand relativ zu dem übrigen Fahrzeugdach auszurichten, während die Schraube noch nicht vollständig festgezogen ist. Sobald eine gewünschte Position des Deckels relativ zum übrigen Fahrzeugdach erreicht ist, ist es möglich, die Schraube festzuziehen, auch wenn der Deckel in der ersten Position angeordnet ist. Das Werkzeug reicht dabei von der der Schraube abgewandten Seite der Führungsschiene durch das Loch hindurch zur Schraube.

Zudem ist es möglich, die Führungsschiene in der dritten Richtung kompakt auszubilden. Es muss kein Bauraum vorgesehen werden, so dass die Schraube oberhalb des Führungskanals angeordnet ist, um für das Werkzeug zugänglich zu bleiben. Auf den herkömmlich vorgesehenen Bauraum, um die Schraube erreichen zu können, kann verzichtet werden. Somit wird Bauraum in der dritten Richtung reduziert.

Gemäß Ausführungsformen ist die Ausnehmung entlang der dritten Richtung über dem Loch positioniert. Somit ist es möglich, dass die Schraube in der ersten Position in dem Führungskanal angeordnet ist, und während dem Verschieben in die zweite Position aus dem Führungskanal auskoppelt. Durch diese Anordnung der Ausnehmung und dem Loch relativ zueinander ist es möglich, das Loch in der einen Ebene vollständig zu umgeben. Somit wird die Stabilität der Führungsschiene erhöht. Zwischen der Ausnehmung und dem Loch ist ein Teil der Führungsschiene vorgesehen. Die Ausnehmung reicht nicht bis zu dem Loch. Zwischen dem Loch und der Ausnehmung besteht keine direkte Verbindung. Das Loch ist nicht nach außen hin offen.

Gemäß weiteren Ausführungsformen weist die Schraube einen Kopf auf zum Kontakt mit dem Werkzeug für das Drehen der Schraube. Der Kopf ist in der ersten Position entlang der ersten und der dritten Richtung vollständig in dem Führungskanal angeordnet. Die Schraube erstreckt sich länglich ausgedehnt entlang der zweiten Richtung. Entlang der zweiten Richtung ist die Schraube, insbesondere der Kopf, teilweise in dem Führungskanal angeordnet und erstreckt sich aus dem Führungskanal heraus mindestens bis zu dem Deckelträger. In der ersten und der dritten Richtung ist die Schraube jedoch in der ersten Position vollständig in dem Führungskanal angeordnet, so dass sich die Schraube in der ersten Position entlang der ersten und der dritten Richtung nicht nach außerhalb des Führungskanals erstreckt. Somit wird Bauraum reduziert. Gemäß weiteren Ausführungsformen ist der Kopf auch in der zweiten Richtung in der ersten Position vollständig in dem Führungskanal angeordnet. Lediglich der Gewindeschaft der Schraube erstreckt sich nach außerhalb des Führungskanals. Somit wird Bauraum in der zweiten Richtung reduziert.

Der Deckelträger ist mit einem Gleiter gekoppelt. Der Gleiter ist in dem Führungskanal entlang der ersten Richtung verschiebbar. Die Ausdehnung des Gleiters entlang der ersten Richtung ist größer als eine Ausdehnung der Ausnehmung entlang der ersten Richtung. Somit wird ein verlässliches Verschieben zwischen der ersten und der zweiten Position ermöglicht. Ein Verhaken des Gleiters in der Ausnehmung wird vermieden.

Gemäß weiteren Ausführungsformen ist die Ausdehnung des Gleiters entlang der ersten und/oder der dritten Richtung größer als eine jeweilige Ausdehnung des Lochs entlang der ersten und/oder der dritten Richtung. Somit wird ein verlässliches Verschieben zwischen der ersten und der zweiten Position ermöglicht. Ein Verhaken mit dem Loch wird vermieden.

Der Deckel ist insbesondere dazu ausgebildet, nach Art eines Spoilerdachs eine Dachöffnung des Fahrzeugdachs in der ersten Position zu verschließen und in der zweiten Position zumindest teilweise freizugeben mittels einer Bewegung des Deckels relativ zum Fahrzeug. Das Verschließen ist insbesondere in der ersten Position und die Freigabe in der zweiten Position realisiert. Der Deckel ist beispielsweise an seiner vorderen, der Frontschreibe des Fahrzeugs zugewandten Seite mittels einer Mechanik mit der Führungsschiene verbunden. Der hintere Teil des Deckels ist ausstellbar und über den hinteren festen Teil des Fahrzeugdachs verschiebbar. Gemäß weiteren Ausführungsformen ist der Deckel Teil eines anders aufgebauten Fahrzeugdachs.

Weitere Vorteile, Merkmale und Weiterbildungen ergeben sich aus den nachfolgenden, in Verbindung mit den Figuren erläuterten Beispielen. Gleiche, gleichartige oder gleichwirkende Elemente können dabei mit den gleichen Bezugszeichen versehen sein.

Es zeigen:
Figur 1 eine schematische Darstellung einer Aufsicht auf ein Kraftfahrzeug gemäß Ausführungsformen,
Figur 2 eine schematische Darstellung eines Systems gemäß Ausführungsformen,
Figur 3 eine schematische Darstellung eines Details des Systems gemäß Ausführungsformen,
Figuren 4A und 4B eine schematische Darstellung eines Details des Systems gemäß Ausführungsformen,
Figuren 5A und 5B eine schematische Darstellung eines Details des Systems gemäß Ausführungsformen, und
Figur 6 eine schematische Schnittansicht des Systems gemäß Ausführungsformen.

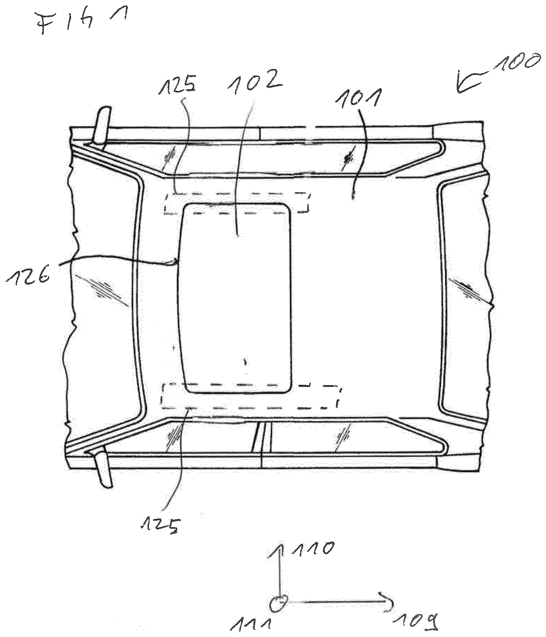

Figur 1 zeigt ein Fahrzeug 100 gemäß Ausführungsformen, insbesondere ein Kraftfahrzeug, beispielsweise einen Personenkraftwagen. Fahrzeug 100 weist ein Fahrzeugdach 101 auf. In dem Fahrzeugdach 101 ist eine Dachöffnung 126 vorgesehen. Die Dachöffnung 126 ist durch einen Deckel 102 verschließbar. Der Deckel 102 ist gemäß Ausführungsformen relativ zu dem übrigen Fahrzeugdach 101 beweglich angeordnet. Dadurch ist es möglich, mittels des Deckels 102 die Dachöffnung 126 wahlweise zu verschließen oder zumindest teilweise freizugeben. Insbesondere ist der Deckel 102 in einer ersten Position so angeordnet, dass die Dachöffnung geschlossen ist. In einer zweiten Position ist der Deckel 102 so angeordnet, dass die Dachöffnung 126 zumindest teilweise freigegeben ist.

Beispielsweise ist der Deckel 102 Teil eines Spoilerdachs. Gemäß weiteren Ausführungsformen ist der Deckel Teil eines Panoramadachs, eines Schiebedachs, beispielsweise eines außen geführten Schiebedachs und/oder eines Schiebehebedachs. Insbesondere ist der Deckel 102 entlang einer ersten Richtung 109 verschiebbar. Die erste Richtung 109 wird auch x-Richtung genannt und erstreckt sich zwischen einer Frontscheibe des Fahrzeugs 100 und einer Heckscheibe.

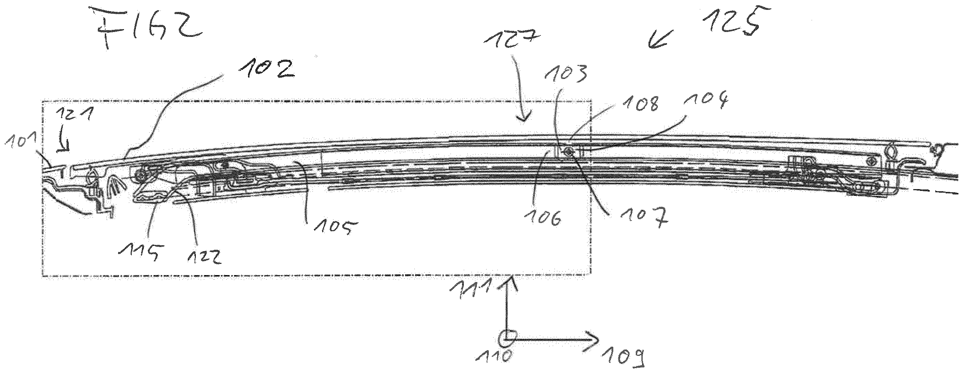

Figur 2 zeigt schematisch ein System 125 zur Kopplung des Deckels 102 mit dem Fahrzeugdach 101. Am Fahrzeug 101 ist an zwei gegenüberliegenden Seiten des Deckels 102 jeweils ein System 125 angeordnet. Die beiden Systeme 125 sind korrespondierend zueinander ausgebildet. Das im Folgenden für das System 125 Erläuterte gilt folglich für das zweite System 125 entsprechend.

Der Deckel 102 erstreckt sich vor allem entlang der ersten Richtung 102 und einer quer dazu verlaufenden zweiten Richtung 110. Die zweite Richtung 110 wird auch y-Richtung genannt. Quer zur ersten Richtung 109 und der zweiten Richtung 110 ist eine dritte Richtung 111 ausgerichtet, die auch z-Richtung genannt wird.

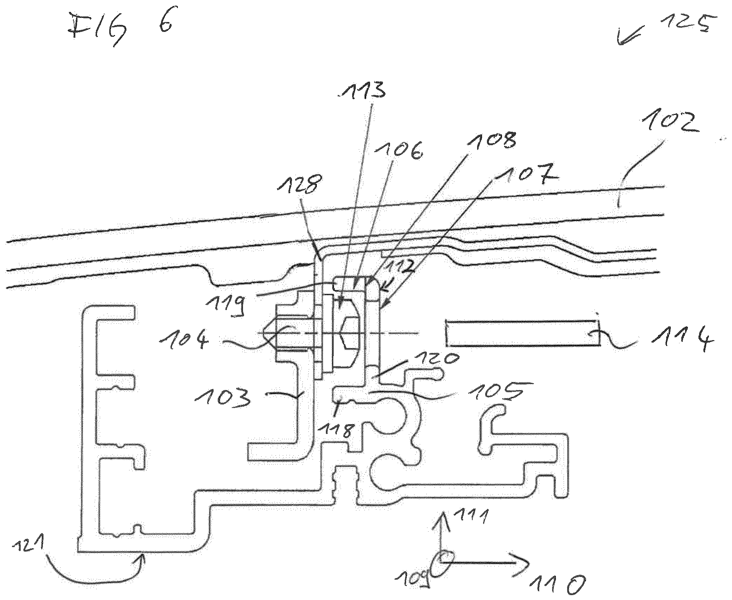

Entlang der dritten Richtung 111 unterhalb des Deckels 102 ist ein Deckelträger 103 angeordnet. Der Deckelträger 103 ist mittels mindestens einer Schraube 104 an dem Deckel befestigt. Beispielsweise ist an dem Deckel hierzu ein Winkel 128 (Figur 6) befestigt, beispielsweise angeschäumt oder angespritzt. An dem Winkel 128 wird der Deckelträger 103 mittels der Schraube 104 befestigt.

Der Deckelträger 103 ist mit einer Führungsschiene 105 gekoppelt. Die Führungsschiene ist insbesondere relativ zum Fahrzeugdach 101 unbeweglich mit dem Fahrzeugdach 101 verbunden. Die Kopplung des Deckelträgers 103 mit der Führungsschiene umfasst insbesondere eine Ausstellmechanik, um den Deckel ausgehend von der ersten Position in der dritten Richtung 111 anzuheben und in die erste Richtung 109 relativ zum Fahrzeugdach 101 zu verschieben.

Hierzu ist die Führungsschiene 105 beispielsweise mit einem Gleiter 115 gekoppelt. Der Gleiter 115 ist einem Führungskanal 106 der Führungsschiene 105 geführt, um zumindest einen Teil der Bewegung des Deckels 102 relativ zum Fahrzeugdach 101 zu steuern. Der Gleiter 115 ist insbesondere in einem vorderen Bereich 122 des Führungskanals 106 angeordnet, wenn der Deckel 102 in der ersten Position angeordnet ist. Der vordere Bereich 122 des Führungskanals 106 ist an einem der Frontscheibe zugewandten Ende der Führungsschiene 105 vorgesehen.

In einem mittleren Bereich 127 der Führungsschiene 105 ist ein Loch 107 in die Führungsschiene 105 eingebracht. In dem mittleren Bereich 127 ist zudem eine Ausnehmung 108 in die Führungsschiene eingebracht. Das Loch 107 ist an der Führungsschiene 105 so positioniert, dass es in der ersten Position einen Zugang zu der Schraube 105 ermöglicht. Zudem ist das Loch 107 an dem Führungskanal 106 angeordnet. Wenn der Deckel 102 in die zweite Position verschoben wird, bewegt sich der Gleiter 115 im Führungskanal 106 an dem Loch 107 vorbei.

Die Ausnehmung 108 ist in der dritten Richtung 111 über dem Loch 107 angeordnet. Durch die Ausnehmung 108 ist es möglich, die Schraube 104 aus dem Führungskanal 106 in Richtung 111 hinauszuführen und wieder hineinzuführen. Beim Ausstellen des Deckels 102 gelangt der Deckelträger 103 mit der Schraube 104 in der dritten Richtung 111 nach oben. Dabei bewegt sich die Schraube 104 durch die Ausnehmung 108. Dadurch ist es möglich, dass die Schraube über den Deckelträger in der zweiten Richtung 110 vorspringt.

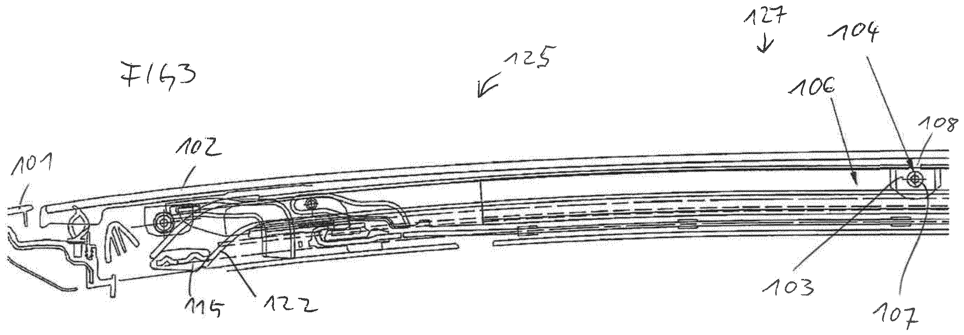

Figur 3 zeigt den vorderen Bereich 122 und den mittleren Bereich 127 in einer detaillierteren Darstellung. Dabei ist die Ausnehmung 108 in der Führungsschiene 105 ersichtlich. Das Loch 107 und die Schraube 104 fluchten in der ersten Position. Insbesondere sind das Loch 107 und die Schraube 104 innerhalb vorgegebener Toleranzen konzentrisch angeordnet.

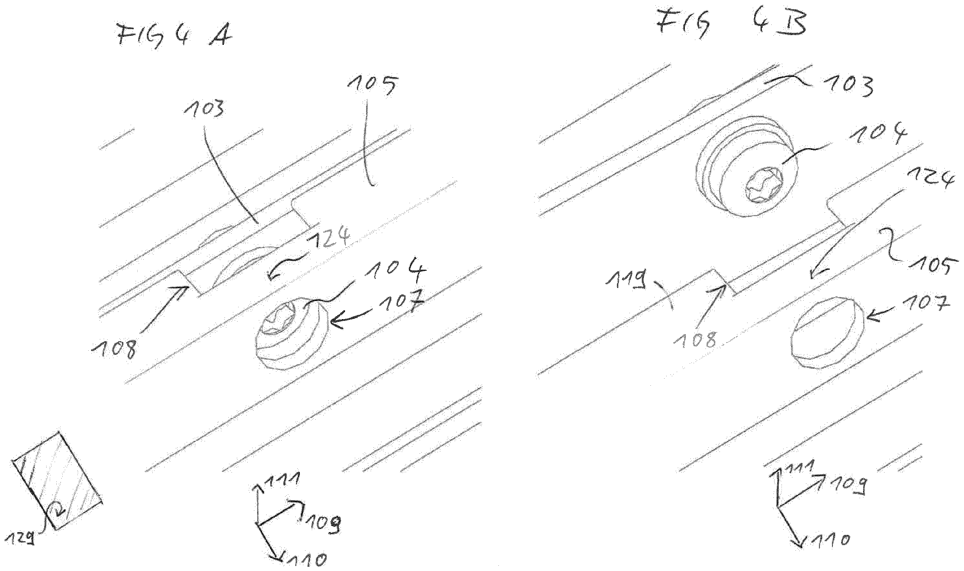

Die Anordnung der Schraube 104 relativ zur Führungsschiene 105 in der ersten Position ist detaillierter in Figur 4A dargestellt. Durch das Loch 107 ist die Schraube 104 mittels eines Werkzeugs 114 (Figur 6) kontaktierbar. Somit ist es möglich, während der geschlossenen Position des Deckels 102 die Schraube 104 zu drehen und somit die Befestigung des Deckels 102 am Deckelträger 103 zu festigen oder zu lösen.

Beispielsweise wird während der Montage zunächst der Deckel 102 relativ zum Deckelträger 103 beweglich mit der Schraube 104 gekoppelt. Die Schraube ist noch nicht vollständig festgezogen. Somit ist es möglich in der ersten Position den Deckel 102 in eine vorgegebene relative Lage zum Fahrzeug 101 zu positionieren. Ist die vorgegebene Lage erreicht, wird die Schraube 104 festgezogen. Dabei wird das Werkzeug 114 durch das Loch 107 hindurch bis zur Schraube 104 geführt.

Das Loch 107 wird von der Führungsschiene 105 in einer Ebene 129 (Figur 4A) vollständig umschlossen. Die Ebene 129 wird durch die erste Richtung 109 und die dritte Richtung 111 vorgegeben. Das Loch 107 weist in der ersten Richtung 109 und in der zweiten Richtung 110 keinen Durchbruch nach außerhalb der Führungsschiene 105 auf. In der Ebene 129, die durch die erste Richtung 109 und die zweite Richtung 110 aufgespannt wird, weist das Loch 107 keinen Durchbruch nach außerhalb der Führungsschiene 105 auf. Die Ausnehmung 108 und das Loch 107 sind durch einen Teil 124 der Führungsschiene 105 voneinander getrennt. Zwischen dem Loch 107 und der Ausnehmung 108 ist der Teil 124 der Führungsschiene 105 angeordnet. Der Teil 124 geht direkt ohne einen Zwischenraum in die benachbarten Abschnitte der Führungsschiene über. Beispielsweise ist das Loch 107 rund oder oval und in die Führungsschiene 105 gebohrt.

In der ersten Position des Deckels 102 ist die Schraube 104 im Führungskanal 106 angeordnet und dennoch durch das Loch 107 hindurch erreichbar. Somit ist es möglich, entlang der dritten Richtung 111 das System 125 im Vergleich zu herkömmlichen Systemen kompakter auszubilden. Es muss kein extra Bauraum entlang der dritten Richtung 111 für die Schraube 104 oberhalb des Führungskanals 106 vorgesehen werden. Somit ist es möglich, die Führungsschiene 105 und insbesondere den Führungskanal 106 so anzuordnen, dass die Führungsschiene 105 und insbesondere der Führungskanal 106 in der ersten Position in der dritten Richtung 111 nahe am Deckel 102 angeordnet sind.

Damit die Schraube 104 aus dem Führungskanal 106 aus- und einkoppeln kann, ist die Ausnehmung 108 vorgesehen. Die Ausnehmung 108 ist relativ zum Loch 107 so positioniert, dass bei einer Bewegung des Deckels 102 von der ersten Position zu der zweiten Position die Bewegung des Deckelträgers 103 nicht durch einen Kontakt der Schraube 104 mit der Führungsschiene 105 behindert wird.

Der ausgekoppelte Zustand der Schraube 104 ist in Figur 4B dargestellt. Der Deckelträger 103 ist relativ zur Führungsschiene 105 in die dritte Richtung 111 bewegt worden. Dabei ist die Schraube 104 durch die Ausnehmung 108 nach außerhalb der Führungsschiene 104 gelangt. Die Ausnehmung 108 ist in einem oberen Bereich 119 der Führungsschiene 105 vorgesehen. Die Ausnehmung 108 ist entlang der zweiten Richtung 110 in eine Richtung offen und in der entgegengesetzten Richtung durch den Teil 124 der Führungsschiene begrenzt. Entlang der ersten Richtung 109 ist die Ausnehmung 108 in beide Richtungen durch die Führungsschiene 105 begrenzt. Somit ist die Führungsschiene 125 stabil ausgeführt. Die Führungsschiene 105 ermöglicht ein aus- und einkoppeln der Schraube 104 in den Führungskanal 106. Mittels der Ausnehmung 108 ist ein Freiraum für die Bewegung der Schraube 104 durch den Bereich 119 der Führungsschien 105 gegeben. Die Schraube ist im ersten Zustand im Führungskanal 106 angeordnet und im zweiten Zustand außerhalb des Führungskanals 106 angeordnet. Zudem ist das System 125 kompakt ausgebildet.

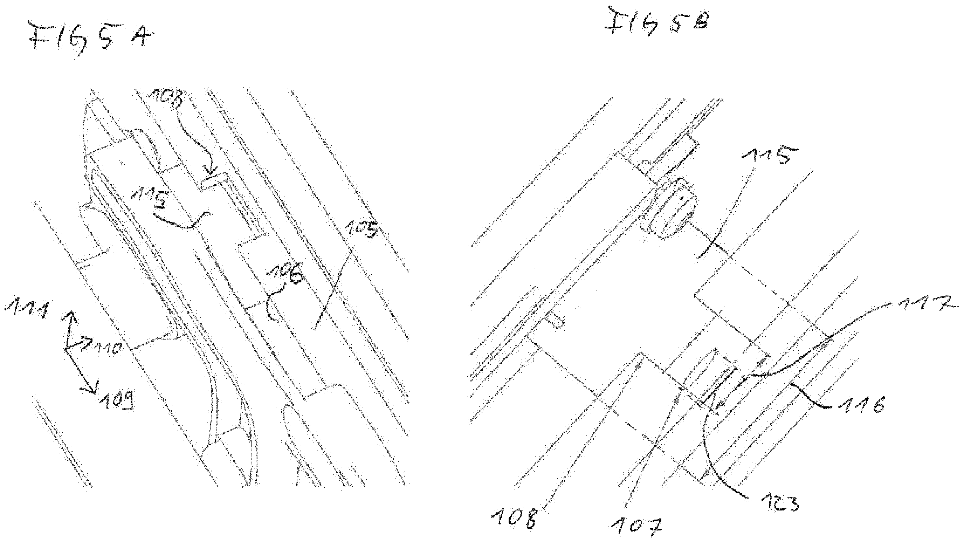

Figuren 5A und 5B zeigen die relativen Abmessungen des Gleiters 115 sowie des Lochs 107 und der Ausnehmung 108. Beim Verschieben des Deckels 102 in die geöffnete Position passiert der Gleiter 115 den mittleren Bereich 127 der Führungsschiene 105. Dabei ist der Gleiter 115 im Führungskanal 106 geführt. Der Gleiter 115 ist insbesondere mit dem Deckelträger 103 gekoppelt. Eine Ausdehnung 116 des Gleiters 115 entlang der ersten Richtung 109 ist größer als eine Ausdehnung 117 der Ausnehmung 108 entlang der ersten Richtung 109. Somit wird ein verlässliches Passieren des Gleiters 115 einer Ausnehmung 108 realisiert. Ein Verhaken des Gleiters 115 an der Kante der Ausnehmung 108 wird vermieden. Insbesondere wird ein Auskoppeln des Gleiters 115 aus dem Führungskanal 106 in der dritten Richtung 111 durch die Ausnehmung 108 vermieden.

Eine Ausdehnung 123 des Lochs ist kleiner als die Ausdehnung 116 des Gleiters 115. Die Ausdehnung 123 des Lochs 107 ist insbesondere in die erste Richtung 109 und in die dritte Richtung 111 kleiner als die entsprechende Ausdehnung 116 des Gleiters 115. Somit ist ein verlässliches Passieren des Gleiters 115 des Lochs 107 realisiert.

Figur 6 zeigt eine Schnittansicht quer zur ersten Richtung 109 des Systems 125. Die Schraube 104 weist einen Kopf 113 auf. Der Kopf 113 ist im ersten Zustand vollständig im Führungskanal 106 angeordnet.

Der Führungskanal 106 wird durch einen ersten Bereich 118 und den zweiten Bereich 119 der Führungsschiene 105 entlang der dritten Richtung 111 begrenzt. Die Ausnehmung 108 ist in den zweiten Bereich 119 eingebracht. Der erste Bereich 118 und der zweite Bereich 119 erstrecken sich vor allem entlang der zweiten Richtung 110. Quer zum ersten Bereich 118 und zum zweiten Bereich 119 ist der Führungskanal 106 durch einen dritten Bereich 120 der Führungsschiene 105 begrenzt. Der dritte Bereich 120 begrenzt den Führungskanal 106 entlang der zweiten Richtung 110 in eine Richtung. Entgegengesetzt entlang der zweiten Richtung 110 ist der Führungskanal 106 offen. Das Loch 107 ist in den dritten Bereich 120 eingebracht. Der dritte Bereich 120 erstreckt sich im Wesentlichen entlang der dritten Richtung 111.

Die Schraube 104, insbesondere der Kopf 113 der Schraube 104 ist von einer dem Führungskanal gegenüberliegenden Seite 112 der Führungsschiene 105 aus durch das Loch 107 hindurch mit dem Werkzeug 114 kontaktierbar. In der ersten Position ist der Kopf 113 im Führungskanal 106 angeordnet und mittels des Werkzeugs 114 drehbar. Somit ist der Kopf 113 der Schraube 104 in der ersten Position für die Befestigung und Einstellung des Deckels 102 frei zugänglich, obwohl der Kopf 113 in dem Führungskanal 106 angeordnet ist. Somit ist es möglich, den Deckel 102 in der ersten Position relativ zum übrigen Fahrzeugdach 101 zu positionieren und zu befestigen. Auf eine Positionierung und Befestigung des Deckels in der zweiten Position kann verzichtet werden. Zudem kann darauf verzichtet werden, den Führungskanal 106 entlang der Richtung 111 weiter von dem Deckel beabstandet anzuordnen, um einen Zugang zum Kopf 113 oberhalb der Führungsschiene 105 zu ermöglichen. Durch die Anordnung des Führungskanals 106 entlang der dritten Richtung 111 nahe am Deckel 102 in der ersten Position ist es möglich, Bauraum von bis zu 10 mm oder mehr entlang der dritten Richtung 111 einzusparen.

Die Montage des Systems 125 im Fahrzeugdach 101 ist einfach möglich. Die Positionierung des Deckels 102 relativ zum Fahrzeugdach 101 ist einfacher möglich als bei herkömmlichen Systemen, bei denen die Positionierung nur in der zweiten Position möglich ist. In der ersten Position ist der Deckel 102 direkt am übrigen Fahrzeugdach angeordnet und somit eine Überprüfung der Ausrichtung direkt möglich. Durch die Anordnung des Gleiters 115 direkt am Deckelträger 103 wird eine sehr stabile Führung des Deckels 102 ermöglicht. Dabei wird bei etwa gleichbleibenden Kosten im Vergleich zu einem herkömmlichen System weniger Bauraum benötigt.

In der ersten Position ist der Kopf 113 komplett im Führungskanal 106 angeordnet. Das Loch 107 zur Ermöglichung der Kontaktierung des Kopfs 113 ist in der zweiten Richtung 110 in dem Bereich 120 angeordnet. Die Ausnehmung 108 ist in der dritten Richtung 111 über dem Kopf 113 in den Bereich 119 der Führungsschiene 105 eingebracht. Der Führungskanal 106 ist in der dritten Richtung 111 direkt unter dem Deckel 102. Der Führungskanal 106 ist im vorderen Bereich 122 mit einer Unterseite 121 der Führungsschiene 105 bündig.

## Patentansprüche

1. System für ein Fahrzeugdach (101), aufweisend:
- einen Deckelträger (103),
- eine Führungsschiene (105) mit einem Führungskanal (106), einem Loch (107) und einer Ausnehmung (108), wobei die Führungsschiene (105) das Loch (107) in einer Ebene (129) vollständig umgibt,
- einen Deckel (102), der zwischen einer ersten und einer zweiten Position entlang der Führungsschiene (105) entlang einer ersten Richtung (109) verschiebbar ist,
- eine Schraube (104), wobei
- der Deckelträger (103) mittels der Schraube (104) am Deckel (102) befestigbar ist, wobei:
- in der ersten Position die Schraube (104) in dem Führungskanal (106) angeordnet ist,
- das Loch (107) so in der Führungsschiene (105) positioniert ist, dass die Schraube (104) durch das Loch (107) von einer dem Führungskanal (106) gegenüberliegenden Seite (112) der Führungsschiene (105) aus entlang einer zweiten Richtung (110) zugänglich ist, und
- die Ausnehmung (108) so an der Führungsschiene (105) positioniert ist, dass die Schraube (104) durch die Ausnehmung (108) hindurch aus dem Führungskanal (106) in eine dritte Richtung (111) auskoppelbar ist, wobei die erste (109), die zweite (110) und die dritte (111) Richtung jeweils quer zueinander ausgerichtet sind, dadurch gekennzeichent, dass
- der Deckelträger (103) mit einem Gleiter (115) gekoppelt ist, und
- der Gleiter (115) in dem Führungskanal (106) entlang der ersten Richtung (109) verschiebbar ist, wobei eine Ausdehnung (116) des Gleiters (115) entlang der ersten Richtung (109) größer ist als eine Ausdehnung (117) der Ausnehmung (108) entlang der ersten Richtung (109).

2. System nach Anspruch 1, bei dem der Deckel (102) relativ zu der Führungsschiene (105) entlang der zweiten Richtung (110) in eine vorgegebene Position bewegbar ist, wenn der Deckel (102) in der ersten Position ist und mittels der Schraube (104) in der vorgegebenen Position fixierbar ist.

3. System nach Anspruch 1 oder 2, bei dem die Ausnehmung (108) entlang der dritten Richtung (111) über dem Loch (107) positioniert ist.

4. System nach einem der Ansprüche 1 bis 3, bei dem die Schraube (104) einen Kopf (113) aufweist zum Kontakt mit einem Werkzeug (114) für das Drehen der Schraube (104), wobei der Kopf (113) in der ersten Position entlang der ersten (109) und der dritten (111) Richtung vollständig in dem Führungskanal (106) angeordnet ist.

5. System nach Anspruch 4, bei dem der Kopf (113) in der ersten Position entlang der zweiten Richtung (110) vollständig in dem Führungskanal (106) angeordnet ist.

6. System nach Anspruch 1, bei dem:
- die Ausdehnung (116) des Gleiters (115) entlang der ersten (109) und/oder der dritten (111) Richtung größer ist als eine jeweilige Ausdehnung (123) des Lochs (107) entlang der ersten (109) und/oder der dritten (111) Richtung.

7. System nach einem der Ansprüche 1 bis 6, bei dem die Führungsschiene (105) in einem Schnitt quer zur ersten Richtung (109) einen ersten Bereich (118) und einen zweiten (119) Bereich aufweist, die sich jeweils entlang der zweiten Richtung (110) erstrecken, in der dritten Richtung (111) zueinander beabstandet sind und den Führungskanal (106) begrenzen, wobei die Ausnehmung (108) von dem zweiten Bereich (119) umgeben ist.

8. System nach einem der Ansprüche 1 bis 7, bei dem die Führungsschiene (105) in einem Schnitt quer zu der ersten Richtung (109) einen dritten Bereich (120) aufweist, der sich entlang der dritten Richtung (111) erstreckt und den Führungskanal (106) begrenzt, wobei das Loch (107) von dem dritten Bereich (120) umgeben wird.

9. System nach einem der Ansprüche 1 bis 8, bei der der Deckel (102) dazu ausgebildet ist, nach Art eines Spoilerdachs eine Dachöffnung (126) des Fahrzeugdachs (101) in der ersten Position zu verschließen und in der zweiten Position zumindest teilweise freizugeben mittels einer Bewegung des Deckels (102) relativ zu dem Fahrzeugdach (101).

## Claims

1. System for a vehicle roof (101), having:
- a cover carrier (103),
- a guide rail (105) with a guide channel (106), a hole (107) and a cutout (108), wherein the guide rail (105) completely surrounds the hole (107) in a plane (129),
- a cover (102) which is displaceable between a first and a second position along the guide rail (105) along a first direction (109),
- a screw (104), wherein
- the cover carrier (103) can be fastened to the cover (102) by means of the screw (104), wherein:
- the screw (104) is arranged in the guide channel (106) in the first position,
- the hole (107) is positioned in the guide rail (105) such that the screw (104) is accessible along a second direction (110) through the hole (107) from a side (112) of the guide rail (105) opposite to the guide channel (106), and
- the cutout (108) is positioned on the guide rail (105) such that the screw (104) can be decoupled in a third direction (111) from the guide channel (106) through the cutout (108), wherein the first (109), the second (110) and the third (111) direction are each oriented transversely to one another, **characterized in that**
- the cover carrier (103) is coupled to a slider (115), and
- the slider (115) is displaceable in the guide channel (106) along the first direction (109), wherein an extent (116) of the slider (115) along the first direction (109) is greater than an extent (117) of the cutout (108) along the first direction (109).

2. System according to Claim 1, in which the cover (102) is movable relative to the guide rail (105) along the second direction (110) into a predetermined position if the cover (102) is in the first position and can be fixed by means of the screw (104) in the predetermined position.

3. System according to Claim 1 or 2, in which the cutout (108) is positioned above the hole (107) along the third direction (111).

4. System according to one of Claims 1 to 3, in which the screw (104) has a head (113) for contact with a tool (114) for turning the screw (104), wherein the head (113) is arranged completely in the guide channel (106) in the first position along the first (109) and the third (111) direction.

5. System according to Claim 4, in which the head (113) is arranged completely in the guide channel (106) in the first position along the second direction (110).

6. System according to Claim 1, in which:
- the extent (116) of the slider (115) along the first (109) and/or the third (111) direction is greater than a respective extent (123) of the hole (107) along the first (109) and/or the third (111) direction.

7. System according to one of Claims 1 to 6, in which, in a section transversely to the first direction (109), the guide rail (105) has a first region (118) and a second (119) region which each extend along the second direction (110), are spaced apart from one another in the third direction (111) and delimit the guide channel (106), wherein the cutout (108) is surrounded by the second region (119).

8. System according to one of Claims 1 to 7, in which, in a section transversely to the first direction (109), the guide rail (105) has a third region (120) which extends along the third direction (111) and delimits the guide channel (106), wherein the hole (107) is surrounded by the third region (120).

9. System according to one of Claims 1 to 8, in which the cover (102) is designed to close, in the manner of a spoiler roof, a roof opening (126) of the vehicle roof (101) in the first position and at least partially open it in the second position by means of a movement of the cover (102) relative to the vehicle roof (101).

## Revendications

1. Système pour un toit de véhicule (101), présentant:
- un support de couvercle (103),
- un rail de guidage (105) avec un canal de guidage (106), un trou (107) et un évidement (108), dans lequel le rail de guidage (105) entoure entièrement le trou (107) dans un plan (129),
- un couvercle (102), qui peut être déplacé entre une première position et une seconde position le long du rail de guidage (105) suivant une première direction (109),
- une vis (104),
dans lequel
- le support de couvercle (103) peut être fixé au couvercle (102) au moyen de la vis (104),
dans lequel:
- dans la première position la vis (104) est disposée dans le canal de guidage (106),
- le trou (107) est positionné dans le rail de guidage (105), de telle manière que la vis (104) soit accessible à travers le trou (107) suivant une deuxième direction (110) à partir d'un côté (112) du rail de guidage (105) opposé au canal de guidage (106), et
- l'évidement (108) est positionné sur le rail de guidage (105), de telle manière que la vis (104) puisse être découplée hors du canal de guidage (106) à travers l'évidement (108) suivant une troisième direction (111), dans lequel la première (109), la deuxième (110) et la troisième (111) directions sont respectivement orientées transversalement l'une à l'autre,
**caractérisé en ce que**
- le support de couvercle (103) est couplé à un coulisseau (115), et
- le coulisseau (115) est déplaçable dans le canal de guidage (106) suivant la première direction (109), dans lequel une extension (116) du coulisseau (115) suivant la première direction (109) est plus grande qu'une extension (117) de l'évidement (108) suivant la première direction (109).

2. Système selon la revendication 1, dans lequel le couvercle (102) est déplaçable par rapport au rail de guidage (105) suivant la deuxième direction (110) dans une position prédéterminée, lorsque le couvercle (102) se trouve dans la première position et peut être fixé dans la position prédéterminée au moyen de la vis (104).

3. Système selon la revendication 1 ou 2, dans lequel l'évidement (108) est positionné au-dessus du trou (107) suivant la troisième direction (111).

4. Système selon l'une quelconque des revendications 1 à 3, dans lequel la vis (104) présente une tête (113) destinée à un contact avec un outil (114) pour faire tourner la vis (104), dans lequel la tête (113) dans la première position est disposée entièrement dans le canal de guidage (106) suivant la première direction (109) et la troisième (111) direction.

5. Système selon la revendication 4, dans lequel la tête (113) dans la première position est disposée entièrement dans le canal de guidage (106) suivant la deuxième direction (110).

6. Système selon la revendication 1, dans lequel:
- l'extension (116) du coulisseau (115) suivant la première direction (109) et/ou la troisième direction (111) est plus grande qu'une extension respective (123) du trou (107) suivant la première direction (109) et/ou la troisième direction (111).

7. Système selon l'une quelconque des revendications 1 à 6, dans lequel le rail de guidage (105) présente, dans une coupe transversalement à la première direction (109), une première région (118) et une deuxième région (119), qui s'étendent respectivement suivant la deuxième direction (110), qui sont espacées l'une de l'autre suivant la troisième direction (111) et qui limitent le canal de guidage (106), dans lequel l'évidement (108) est entouré par la deuxième région (119).

8. Système selon l'une quelconque des revendications 1 à 7, dans lequel le rail de guidage (105) présente, dans une coupe transversalement à la première direction, (109), une troisième région (120), qui s'étend suivant la troisième direction (111) et qui limite le canal de guidage (106), dans lequel le trou (107) est entouré par la troisième région (120).

9. Système selon l'une quelconque des revendications 1 à 8, dans lequel le couvercle (102) est configuré pour fermer dans la première position une ouverture de toit (126) du toit de véhicule (101) et pour la libérer au moins partiellement dans la seconde position, au moyen d'un mouvement du couvercle (102) par rapport au toit de véhicule (101), à la manière d'un toit avec becquet.
